# EUROPEAN PATENT SPECIFICATION

(11) **EP 2 668 234 B1**
(45) Date of publication and mention of the grant of the patent: **19.11.2014**
(21) Application number: 12704917.9
(22) Date of filing: 26.01.2012
(51) Int. Cl.: C08L 63/00, C08G 59/18, C08G 59/54

(54) **AQUEOUS BASED EPOXY GROUT**
EPOXIDMÖRTEL AUF WASSERBASIS
COULIS ÉPOXY AQUEUX POUR JOINTOYAGE

(30) Priority: 28.01.2011 IT MI20110104
(43) Date of publication of application: 04.12.2013
(73) Proprietor: Kerakoll S.p.A., 41049 Sassuolo (MO) (IT)
(72) Inventor: SGHEDONI, Gianluca, I-41049 Sassuolo (Modena) (IT)
(74) Representative: Biggi, Cristina
(86) International application number: PCT/IB2012/050364
(87) International publication number: WO 2012/101594

(56) References cited:
- WO-A1-93/21215
- DE-A1- 10 150 600
- US-A- 4 180 166
- US-A1- 2004 134 163
- DATABASE WPI Week 200559 Thomson Scientific, London, GB; AN 2005-574312 XP002658801, & JP 2005 200948 A (SANYO CHEM IND LTD) 28 July 2005 (2005-07-28)
- DATABASE WPI Week 199306 Thomson Scientific, London, GB; AN 1993-051443 XP002658802, & SU 1 717 611 A1 (SEVMASHPREDPRIYATE PRODN ASSOC) 7 March 1992 (1992-03-07)

## Description

The present invention relates to an aqueous based epoxy grout and the use thereof as a filler material for the installation of tiles.

As it is well known, ceramic, natural stone and glassy mosaic claddings are generally made by gluing tiles of various sizes to a substrate; the tiles are normally laid side by side, leaving spaces (known as joints) of variable size. Said joints perform the technical function of joining the tiles together, compensating the imperfections in the materials and any possible imprecision caused by the installation, thus assuring the best functional continuity of the tiling. The joints also fulfil an equally important aesthetic function, which is decisive for achieving the desired final appearance of the cladding.

Once the adhesive that fixes the tiles has set, the joints are filled with a hardening filler material called grout. The grout is applied with a suitable rubber spatula, normally over the entire tiled surface. Subsequently, the applier removes the excess of the grout from the tiles and finishes the surface of the joint through the action of a sponge usually moistened with water (so-called "sponging off").

The grouts used as joint fillers in ceramic cladding can be formulated with binders of a concrete or organic type. Organic grouts are normally subdivided into bicomponents (of an epoxidic/amino nature) or monocomponents (acrylic, polyurethanic, etc.). Irrespective of their nature, grouts must be endowed with good workability in order to facilitate the application thereof in joints, both on horizontal surfaces and walls, and they also must be endowed of a consistency such as to enable the total filling of the joint under any conditions of application. A good workability of the grout enables a rapid, defect-free application. At the present state of the art, concrete-based grouts exhibit an overall workability which is definitely preferred over organic-based bicomponent and monocomponent grouts.

Another fundamental characteristic for a grout is the ease of removing the excess from the tiled surface by sponging it off. This operation must be as effortless as possible and such as to maintain the joint filled, with a continuous, defect-free finishing.

As mentioned above, the grout performs an extremely important decorative role. From this point of view, the aesthetics of the finish, homogeneity and durability of the colour and possibility of maintenance over time are also decisive.

Concrete-based grouts do not offer ample guarantees in this respect. A well-known phenomenon related to this type of material is the saline efflorescence, due to the formation of CaCO₃ by reaction of the CaO present in the initial matrix with water and CO₂. Different processes of hydration of such systems, due to the complexity of the concrete, and a particular sensitivity to the installation conditions, may give rise to the formation of variegations in the grout's colour. Such phenomena are at the basis of aesthetic problems due to the non homogeneity of the grout's appearance and consequently of the finished claddings. Concrete-based grouts are moreover more subject to chemical aggressions of various kinds and easily stained, as a result of a higher or lower degree of absorption of the fluids that the joint may come into contact with.

Also from the standpoint of dimensional stability and/or behaviour under tensional stresses, because of their high rigidity, grouts based on concrete binders can pose significant problems. Phenomena of cracking due to hygrometric shrinkage during the hardening phase or movements of linear contraction and expansion of the materials making up the cladding are in fact common.

By their own nature, organic grouts, in contrast, assure superior performance in terms of dimensional deformability, impermeability to fluids, which is practically total, and resistance to chemical aggressions and stains.

Although concrete-based grouts are the most widely used because of their easy applicability, there remains the fact that epoxy grouts guarantee a considerably superior aesthetic result, a more complete functionality and a higher mechanical durability.

Typically, a bicomponent aqueous based epoxy grout is constitute by a first component including a liquid epoxy resin, possibly diluted with a reactive diluent, wherein inorganic fillers and pigments are dispersed in addition to various additives, such as plasticizers and rheological additives, and a second component including at least one polyamine or polyamide or a derivative thereof, which performs the function of crosslinking the resin by reaction between the amine groups and the epoxy groups.

For example, patent EP 1 581 573 B1 relates to an epoxy grout which comprises: a water-dispersible, room temperature cross-linkable epoxy polymer; a water compatible adduct between a polyamine and an epoxy resin; a filler; and a hydrophobic component. The latter, in particular, is a waxes based emulsion, for example paraffin waxes and polyethylene waxes.

Patent EP 1 771 397 B1 relates to a mixture for applying tile claddings which includes an epoxy binder, a hardener, mineral fillers, a rheological additive for facilitating the application of the mixture and a plasticizer/wetting agent comprising isomers of diisopropyl-naphthalene (C₁₆H₂₀), which imparts hydrophobic properties to the material.

The Applicant has now posed itself the problem of producing an aqueous based epoxy grout having the following features:
∼ good workability during application in the joints;
∼ ease of cleaning away the grout in excess (spongeability), by the same methods as for concrete grout;
∼ high aesthetic and functional quality in the long term;
∼ impermeability and stain resistance;
∼ resistance to fungi and bacteria;
∼ good chemical and mechanical resistance.

Moreover, being aqueous based, the product is free of solvents and volatile products (VOCs) in general, thus significantly improving the degree of eco-friendliness, namely respecting the environment and the health of workers.

The Applicant has now found that the addition to the aqueous based epoxy of at least one non-ionic surfactant having at least one polyoxyethylene chain as hereinafter defined grout allows the overcome the aforesaid technical problem, since it increases the grout's affinity for water thus making the process of sponging off the grout after its application much easier, so to ensure the removal of the grout in excess while at the same time maintaining a continuous, defect-free finishing, without causing the formation of air holes inside the joints. Said surfactant also facilitates the step of mixing and homogenizing of the first component of the grout containing the epoxy resin with the second component containing the polyamine compound that acts as the crosslinking agent, which step is carried out on site to avoid premature crosslinking of the grout itself. In fact, the first component is usually substantially free of water, whilst the second is an aqueous based one, thereby the aforesaid surfactant makes their mixing and homogenization faster and complete, thus to obtain a highly homogeneous product even when the components are mixed for a short time.

In a first aspect, the present invention thus relates to an aqueous based epoxy grout comprising:
at least one epoxy resin;
at least one polyamine compound;
at least one mineral filler;
at least one non-ionic surfactant as defined in present claim 1.

In a second aspect, the present invention relates to the use of an aqueous based epoxy grout as defined above as a filler of spaces present between side-by-side tiles (joints).

In another aspect, the present invention relates to a kit for filling spaces present between side-by-side tiles (joints), comprising:
(A) a first component which comprises:
   at least one epoxy resin;
   at least one mineral filler;
(B) a second component which comprises:
   at least one polyamine compound;
   water;
wherein at least one of the first and second component comprises at least one non-ionic surfactant as defined in present claim 1.

As regards the epoxy resin, this is generally a water-dispersible resin crosslinkable at room temperature so as to form, as soon as being mixed with the polyamine compound, a stable crosslink by reaction between the epoxy groups and the amine groups. The epoxy resin contains at least one, preferably at least two, 1,2-epoxy groups, and is preferably liquid at room temperature. The epoxy resin preferably has an epoxide equivalent weight (EEW) ranging from 150 to 1000, more preferably from 156 to 700.

The epoxy resin can be of an aliphatic, aromatic and/or heterocyclic type and can be substituted with various substituents, e.g. halogens, hydroxyls, ether groups and the like. The epoxy resin can be used as such or in the form of a solution in a suitable solvent, or as an aqueous emulsion, optionally in the presence of a co-solvent. The solvent and/or the co-solvent can be of the reactive or non-reactive type, in particular an ether, such as, for example, C₁₂-C₁₄ alkyl glycidyl ether (CAS No. 68609-97-2).

Particularly preferred epoxy resins are those obtained from: bisphenol-A/epichlorohydrin (CAS No. 25068-38-6) and bisphenol-F/diglyciciyl ether (CAS No. 028064-14-4). As regards the polyamine compound, this may be in particular selected from: polyamines, polyamidoamines, polyamine-epoxide adducts, polyamides, and mixtures thereof, having an aliphatic, cycloaliphatic and/or aromatic structure.

Due to their greater affinity for water, polyamidoamines and polyamine-epoxide adducts, and mixtures thereof, are preferred.

Polyamine-epoxide adducts are particularly preferred. These are generally obtained by reacting a polyamine, optionally modified, with a compound containing one or more epoxy functionalities (for example the commercial product Polypox™ W804 of the company UPPC GmbH).

As regards the polyamidoamines, these are generally products of a reaction between a polyamine (generally diethylenetriamine, triethylenetetramine, tetraethylenepentamine or piperazine) with a mono- or dicarboxylic acid (usually C₁₆, C₁₈ or C₁₉, derived from tall oil, soybean oil or ricinoleic acid). A particular subclass is the imidazoline polyamidoamines, characterised by the presence of imidazole rings, obtainable by heat treatment during synthesis. Particularly preferred among the polyamines are those having from 2 to 20 carbon atoms and from 2 to 10 amine nitrogen atoms, in particular polyalkylene polyamines of the formula:

H₂N-R- [NHR]ₙ-NH₂,

wherein n is an integer from zero to 6, and R is an alkylene group, preferably C₂-C₃ alkylene. The polyamine can be chosen, for example, among: ethylenediamine, diethylenetriamine, triethylenetetramine, tetraethylenepentamine, pentaethylenehexamine, dipropylenetriamine, tripropylenetetramine and tributylenetriamine.

The ratio between epoxy groups in the epoxy resin and amine groups in the polyamine compound can vary depending on the type of products used and the properties one intends to obtain for the final grout. Preferably, the molar ratio between epoxy groups and amine groups ranges from 0.8 to 1.2, more preferably from 0.9 to 1.1.

As regards the mineral filler, this can be selected among those commonly used in the epoxy resin field, such as, for example: silica, alumina, quartz, calcite, bentonite, limestone, magnesite, gypsum, mica, talc, clays, coloured inerts, glasses, and mixtures thereof. The mineral filler generally has a predetermined particle size distribution aimed to obtaining a homogeneous and easily workable product. Normally, the mineral filler has an average particle size ranging from 1 to 800 microns, preferably from 10 to 500 microns.

In addition to the mineral filler, colouring agents and/or pigments can be added in order to provide the desired colour. These may have inorganic nature (e.g. titanium dioxide, iron oxides, carbon black, chromium oxides, bismuth salts, vanadium, cobalt, molybdenum, aluminium) or organic nature (e.g. azo-pigments, phthalocyanine, chinonic compounds). The pigments and/or colouring agents can be added as such, or associated beforehand with the mineral filler, for instance by coating the latter with a paint containing said pigments and/or colouring agents.

As regards the non-ionic surfactant having at least one polyoxyethylene chain, this is generally obtained by reacting ethylene oxide with a compound having a long hydrocarbon chain, selected for example from: fatty alcohols, fatty amines, fatty esters and glycerides.

Preferably, the non-ionic surfactant is selected from products of the formula:

R-(OCH₂CH₂)ₙOH (I)

wherein:
R is an alkyl or alkenyl group having from 8 to 40, preferably from 10 to 30, carbon atoms; n is an integer from 1 to 30, preferably from 1 to 20.

Among the products of formula (I), ethoxylated tridecyl alcohol (CAS No. 24938-91-8) is particularly preferred. The aqueous based epoxy grout according to the present invention can also contain other components including: UV stabilizers, dispersing, anti-foaming, deaerating and wetting agents, plasticizers, fungicides, adhesion promoters, etc.

Preferably, the epoxy grout according to the present invention further comprises at least one rheological additive, which has the purpose of improving the applicability of the final product. Said rheological additive can preferably be selected from among: hydrogenated castor oil, pyrogenic silicas, bentonites, polyurethane or acrylic thickeners, and mixtures thereof.

The epoxy grout according to the present invention can be produced by mixing the various components according to conventional techniques. Preferably, the grout is produced in the form of a bicomponent grout, whose component A comprises the epoxy resin, while component B comprises the polyamine compound. The two components A and B are produced and packaged separately, and mixed only at the time of application, which must take place within a short time after mixing so as to avoid premature crosslinking of the product.

Preferably, in its final form ready for the use, the epoxy grout according to the present invention comprises:
from 3 to 20% by weight, more preferably from 5 to 15% by weight, of at least one epoxy resin;
from 2 to 15% by weight, more preferably from 4 to 10% by weight, of at least one polyamine compound;
from 50 to 90% by weight, more preferably from 60 to 80% by weight, of at least one mineral filler;
from 0.2 to 10% by weight, more preferably from 0.5 to 5% by weight, of at least one non-ionic surfactant as defined in present claim 1;
from 0 to 2% by weight, more preferably from 0.1 to 0.8% by weight, of at least one rheological additive;
from 1 to 15% by weight, more preferably from 2 to 10% by weight, of water.

The present invention will now be further illustrated by means of some examples of embodiments, which are provided solely by way of example and do not limit the scope of the invention itself.

### EXAMPLE 1.

The following bicomponent epoxy grout was prepared with components A and B (used in a 2:1 ratio) having the composition specified below:

### Component A:

| | |
|---|---|
| Diluted epoxy resin | 16.00% by weight |
| Hydrogenated castor oil | 0.50% by weight |
| Coloured oxides | 5.00% by weight |
| Quartz | 80.00% by weight |
| Non-ionic surfactant | 1.50% by weight |

### Component B:

| | |
|---|---|
| Water | 16.20% by weight |
| Non-ionic surfactant | 1.20% by weight |
| Polyamine-epoxide adduct | 16.00% by weight |
| Imidazolic polyamidoamine | 5.20% by weight |
| Quartz | 59.60% by weight |
| Titanium dioxide | 1.80% by weight |

- Diluted epoxy resin: epoxy resin having an average molecular weight < 700 (produced by reaction between Bisphenol A and Epichlorohydrin; CAS No. 25068-38-6) diluted with alkylglycidyl ether C₁₂-C₁₄ (CAS No. 68609-97-2);
- Non-ionic surfactant: polyoxyethylene tridecyl ether (CAS: 24938-91-8);
- Polyamine-epoxide adduct: commercial product Polypox™ W804 (UPPC GmbH)
- Imidazolic polyamidoamine: commercial product Itamid™ FL41/S (DD-CHEM Srl).

This formulation, once parts A and B had been suitably mixed, was tested as a tile joint filler in ceramic flooring. The workability of the mixture demonstrated to be optimal, also when applied on a vertical wall. The tiling was very easily cleaned using a normal sponge and water. The final aesthetic result was excellent, with homogeneous, filled joints.

The same formulation was also submitted to various laboratory tests on the hardened product, thus showing excellent chemical and mechanical resistance, impermeability, colour stability after aging with UV lamps, and resistance to bacterial and fungal attacks. These tests demonstrate overall the high quality of the product as a grout for ceramic flooring.

## Claims

1. Aqueous based epoxy grout which comprises:
at least one epoxy resin;
at least one polyamine compound;
at least one mineral filler;
at least one non-ionic surfactant having at least one polyoxyethylene chain, of formula (I) of formula (I)
R-(OCH₂CH₂)ₙOH (I)
wherein:
R is an alkyl or alkenyl group having from 8 to 40, preferably from 10 to 30, carbon atoms; n is an integer from 1 to 30, preferably from 1 to 20.
or
at least a non-ionic surfactant obtained by reacting ethylene oxide and a compound having a long hydrocarbon chain, selected from: fatty amines, fatty esters and glycerides.

2. Grout according to claim 1, wherein the non-ionic surfactant is ethoxylated tridecyl alcohol (CAS No. 24938-91-8).

3. Grout according to anyone of the preceding claims, wherein the epoxy resin has an Epoxide Equivalent Weight (EEW) ranging from 150 to 1000, preferably from 156 to 700.

4. Grout according to any one of the preceding claims, wherein the epoxy resin is used as such, or in the form of a solution in a solvent, or of an aqueous emulsion, optionally in the presence of a co-solvent.

5. Grout according to claim 4, wherein the solvent and/or the co-solvent are selected from ethers, in particular they are a C₁₂-C₁₄ alkyl glycidyl ether (CAS No. 68609-97-2).

6. Grout according to any one of the preceding claims, wherein the polyamine compound is selected from: polyamido amines, polyamine-epoxide adducts, and mixtures thereof.

7. Grout according to any one of the preceding claims, wherein the molar ratio between epoxy groups and amine groups ranges from 0.8 to 1.2, preferably from 0.9 to 1.1.

8. Grout according to any one of the preceding claims, wherein the mineral filler is selected from: silica, alumina, quartz, calcite, bentonite, limestone, magnesite, gypsum, mica, talc, clays, coloured inerts, glasses, and mixtures thereof.

9. Grout according to any one of the preceding claims, further comprising at least one rheological additive.

10. Grout according to claim 9, wherein the rheological additive is selected from: hydrogenated castor oil, pyrogenic silicas, bentonites, polyurethane or acrylic thickeners, and mixtures thereof.

11. Grout according to any one of the preceding claims, comprising:
from 3 to 20% by weight, preferably from 5 to 15% by weight, of at least one epoxy resin;
from 2 to 15% by weight, preferably from 4 to 10% by weight, of at least one polyamine compound;
from 50 to 90% by weight, preferably from 60 to 80% by weight, of at least one mineral filler;
from 0.2 to 10% by weight, preferably from 0.5 to 5% by weight, of at least one non-ionic surfactant of formula (I)
R-(OCH₂CH₂)ₙOH (I)
wherein:
R is an alkyl or alkenyl group having from 8 to 40, preferably from 10 to 30, carbon atoms; n is an integer from 1 to 30, preferably from 1 to 20.
or
at least a surfactant
obtained by reacting ethylene oxide and a compound having a long hydrocarbon chain, selected from: fatty amines, fatty esters and glycerides;
from 0 to 2% by weight, preferably from 0.1 to 0.8% by weight, of at least one rheological additive;
from 1 to 15% by weight, preferably from 2 to 10% by weight, of water.

12. Use of an aqueous based epoxy grout according to any one of claims from 1 to 11 as a filler of spaces present between side-by-side tiles (joints).

13. Kit for the preparation of an epoxy grout according to any one of the claims 1-11, comprising:
(A) a first component which comprises:
at least one epoxy resin;
at least one mineral filler;
(B) a second component which comprises:
at least one polyamine compound;
water;
wherein at least one of the first and second component comprises at least one non-ionic surfactant of formula (I)
R-(OCH₂CH₂)ₙOH (I)
wherein:
R is an alkyl or alkenyl group having from 8 to 40, preferably from 10 to 30, carbon atoms; n is an integer from 1 to 30, preferably from 1 to 20.
or
at least a non-ionic surfactant obtained by reacting ethylene oxide and a compound having a long hydrocarbon chain, selected from: fatty amines, fatty esters and glycerides.

## Patentansprüche

1. Epoxidmörtel auf Wasserbasis, umfassend:
mindestens ein Epoxidharz;
mindestens eine Polyaminverbindung;
mindestens ein Mineralfüllstoff;
mindestens ein nichtionisches Tensid, aufweisend mindestens eine Polyoxyethylen-Kette der Formel (I) der Formel (I)
R-(OCH₂CH₂)ₙOH (I)
wobei:
R eine Alkyl- oder Alkenyl-Gruppe ist, aufweisend 8 bis 40, vorzugsweise 10 bis 30 Kohlenstoffatome; n eine ganze Zahl von 1 bis 30, vorzugsweise von 1 bis 20 ist;
oder
mindestens ein nichtionisches Tensid, das durch das Reagieren von Ethylenoxid und einer Verbindung mit einer langen Kohlenwasserstoffkette erhalten wird, die aus Folgendem ausgewählt wird: Fettamine, Fettsäureester und Glyceride.

2. Mörtel nach Anspruch 1, wobei das nichtionische Tensid ethoxylierter Tridecylalkohol (CAS-Nr. 24938-91-8) ist.

3. Mörtel nach einem der vorangehenden Ansprüche, wobei das Epoxidharz ein Epoxidäquivalentgewicht (EEW) von 150 bis 1000, vorzugsweise von 156 bis 700 aufweist.

4. Mörtel nach einem der vorangehenden Ansprüche, wobei das Epoxidharz als solches oder in Form einer Lösung in einem Lösungsmittel oder einer wässrigen Emulsion, optional in Gegenwart eines Hilfslösungsmittels, verwendet wird.

5. Mörtel nach Anspruch 4, wobei das Lösungsmittel und/oder das Hilfslösungsmittel aus Estern ausgewählt werden, wobei sie insbesondere ein C₁₂-C₁₄-Alkylglycidylether (CAS-Nr. 68609-97-2) sind.

6. Mörtel nach einem der vorangehenden Ansprüche, wobei die Polyaminverbindung aus Folgendem ausgewählt wird: Polyamidamine, Polyamin-Epoxid-Addukte und Mischungen davon.

7. Mörtel nach einem der vorangehenden Ansprüche, wobei das Molarverhältnis zwischen Epoxygruppen und Amingruppen von 0,8 bis 1,2, vorzugsweise von 0,9 bis 1,1 reicht.

8. Mörtel nach einem der vorangehenden Ansprüche, wobei der Mineralfüllstoff aus Folgendem ausgewählt wird: Kieselsäure, Tonerde, Quarz, Kalzit, Bentonit, Kalkstein, Magnesit, Gips, Glimmer, Talk, Tone, farbige Zuschlagstoffe, Glas und Mischungen davon.

9. Mörtel nach einem der vorangehenden Ansprüche, ferner umfassend mindestens ein rheologisches Additiv.

10. Mörtel nach Anspruch 9, wobei das rheologische Additiv aus Folgendem ausgewählt wird: hydriertes Rizinusöl, pyrogene Kieselsäuren, Bentonite, Polyurethan- oder Acrylatverdicker und Mischungen davon.

11. Mörtel nach einem der vorangehenden Ansprüche, umfassend:
3 bis 20 Gew.-%, vorzugsweise 5 bis 15 Gew.-%, mindestens eines Epoxidharzes;
2 bis 15 Gew.-%, vorzugsweise 4 bis 10 Gew.-%, mindestens einer Polyaminverbindung;
50 bis 90 Gew.-%, vorzugsweise 60 bis 80 Gew.-%, mindestens eines Mineralfüllstoffes;
0,2 bis 10 Gew.-%, vorzugsweise 0,5 bis 5 Gew.-%, mindestens eines nichtionischen Tensids der Formel (I)
R-(OCH₂CH₂)ₙOH (I)
wobei:
R eine Alkyl- oder Alkenyl-Gruppe ist, aufweisend 8 bis 40, vorzugsweise 10 bis 30 Kohlenstoffatome; n eine ganze Zahl von 1 bis 30, vorzugsweise von 1 bis 20 ist;
oder
mindestens ein Tensid,
das durch das Reagieren von Ethylenoxid und einer Verbindung mit einer langen Kohlenwasserstoffkette erhalten wird, die aus Folgendem ausgewählt wird: Fettamine, Fettsäureester und Glyceride;
0 bis 2 Gew.-%, vorzugsweise 0,1 bis 0.8 Gew.-%, mindestens eines rheologischen Additivs;
1 bis 15 Gew.-%, vorzugsweise 2 bis 10 Gew.-%, von Wasser.

12. Verwendung eines Epoxidmörtels auf Wasserbasis nach einem der Ansprüche 1 bis 11 als Füller von Zwischenräumen zwischen nebeneinanderliegenden Fliesen (Fugen).

13. Satz für die Zubereitung eines Epoxidmörtels nach einem der Ansprüche 1 bis 11, umfassend:
(A) eine erste Komponente, die Folgendes umfasst:
mindestens ein Epoxidharz;
mindestens einen Mineralfüllstoff;
(B) eine zweite Komponente, die Folgendes umfasst:
mindestens eine Polyaminverbindung;
Wasser;
wobei mindestens eine der ersten und zweiten Komponente mindestens ein nichtionisches Tensid der Formel (I) umfasst
R-(OCH₂CH₂)ₙOH (I)
wobei:
R ein Alkyl oder eine Alkenyl-Gruppe ist, aufweisend 8 bis 40, vorzugsweise 10 bis 30 Kohlenstoffatome; n eine ganze Zahl von 1 bis 30, vorzugsweise von 1 bis 20 ist;
oder
mindestens ein nichtionisches Tensid, das durch das Reagieren von Ethylenoxid und einer Verbindung mit einer langen Kohlenwasserstoffkette erhalten wird, die aus Folgendem ausgewählt wird: Fettamine, Fettsäureester und Glyceride.

## Revendications

1. Coulis époxy aqueux comprenant :
au moins une résine époxy ;
au moins un composé de polyamine ;
au moins une charge minérale ;
au moins un tensioactif non ionique ayant au moins une chaîne polyoxyéthylène, de formule (I) de formule (I)
R- (OCH₂CH₂)ₙOH (I)
dans laquelle :
R est un groupe alkyle ou alkenyle disposant de 8 à 40, de préférence de 10 à 30 atomes de carbone ; n est un nombre entier compris entre 1 et 30, de préférence entre 1 et 20.
soit
au moins un tensioactif non ionique obtenu par la réaction de l'oxyde d'éthylène et un composé ayant une longue chaîne hydrocarbonée, sélectionné à partir : d'amines grasses, d'esters d'acide gras et de glycérides.

2. Coulis selon la revendication 1, dans lequel le tensioactif non ionique est de l'alcool tridecylique éthoxylé (CAS N° 24938- 91-8).

3. Coulis selon l'une quelconque des revendications précédentes, dans lequel la résine époxy possède un poids équivalent en époxyde (EEW) compris entre 150 et 1 000, de préférence entre 156 et 700.

4. Coulis selon l'une quelconque des revendications précédentes, dans lequel la résine époxy est utilisée telle que ou sous la forme d'une solution dans un solvant ou d'une émulsion aqueuse, éventuellement en présence d'un cosolvant.

5. Coulis selon la revendication 4, dans lequel le solvant et/ou le cosolvant sont sélectionnés à partir d'éthers, en particulier ceux étant de l'éther glycidylique alkyl C12 -C14 (CAS N° 68609-97-2).

6. Coulis selon l'une quelconque des revendications précédentes, dans lequel le composé de polyamide est sélectionné à partir : d'amines de polyamide, d'adducts de polyamine-époxyde, et leurs mélanges.

7. Coulis selon l'une quelconque des revendications précédentes, dans lequel le rapport molaire entre les groupes époxydiques et les groupes d'amine est compris entre 0,8 et 1,2, de préférence de 0,9 à 1,1.

8. Coulis selon l'une quelconque des revendications précédentes, dans lequel la charge minérale est sélectionnée à partir : de silice, d'alumine, de quartz, de calcite, de bentonite, de calcaire, de magnésite, de gypse, de mica, de talc, des argiles, de matières inertes colorées, de verres et de leurs mélanges.

9. Coulis selon l'une quelconque des revendications précédentes, comprenant de plus au moins un additif rhéologique.

10. Coulis selon la revendication 9, dans lequel l'additif rhéologique est sélectionné à partir : d'huile de ricin hydrogénée, de silices ignées, de bentonites, d'épaississants à base de polyuréthane ou d'acrylique et leurs mélanges.

11. Coulis selon l'une quelconque des revendications précédentes, comprenant :
de 3 à 20 % en poids, de préférence entre 5 et 15 % en poids d'au moins une résine époxy ;
de 2 à 15 % en poids, de préférence entre 4 et 10 % en poids d'au moins un composé de polyamine ;
de 50 à 90 % en poids, de préférence entre 60 et 80 % en poids d'au moins une charge minérale ;
de 0,2 à 10 % en poids, de préférence entre 0,5 et 5 % en poids d'au moins un tensioactif non ionique de formule (I)
R- (OCH₂CH₂)ₙOH (I)
dans laquelle :
R est un groupe alkyle ou alkenyle disposant de 8 à 40, de préférence de 10 à 30 atomes de carbone ; n est un nombre entier compris entre 1 et 30, de préférence entre 1 et 20.
soit
au moins un tensioactif
obtenu par la réaction de l'oxyde d'éthylène et un composé ayant une longue chaîne hydrocarbonée, sélectionné à partir : d'amines grasses, d'esters d'acide gras et de glycérides ;
de 0 à 2 % en poids, de préférence entre 0,1 et 0,8 % en poids d'au moins un additif rhéologique ;
de 1 à 15 % en poids, de préférence entre 2 et 10 % en poids d'eau.

12. Utilisation d'un coulis époxy aqueux selon l'une quelconque des revendications de 1 à 11 comme matière de remplissage d'espaces présents entre des carreaux placés côte à côte (jointures).

13. Kit destiné à la préparation d'un coulis époxy selon l'une quelconque des revendications de 1 à 11, comprenant :
(A) un premier composant comprenant :
au moins une résine époxy ;
au moins une charge minérale ;
(B) un second composant comprenant :
au moins un composé de polyamine ;
de l'eau ;
dans lequel au moins l'un parmi le premier et le second composant comprend au moins un tensioactif non ionique de formule (I)
R- (OCH₂CH₂)ₙOH (I)
dans laquelle :
R est un groupe alkyle ou alkenyle disposant de 8 à 40, de préférence de 10 à 30 atomes de carbone ; n est un nombre entier compris entre 1 et 30, de préférence entre 1 et 20.
soit
au moins un tensioactif non ionique obtenu par la réaction de l'oxyde d'éthylène et un composé ayant une longue chaîne hydrocarbonée, sélectionné à partir de : d'amines grasses, d'esters d'acide gras et de glycérides.
